# FASCICULE DE BREVET EUROPEEN

(11) **EP 4 527 726 B1**
(45) Date de publication et mention de la délivrance du brevet: **13.05.2026**
(21) Numéro de dépôt: 24200182.4
(22) Date de dépôt: 13.09.2024
(51) Int. Cl.: B62K 21/18, B62K 21/24, B62K 21/12

(54) **POTENCE DE VELO**
FAHRRADLENKERVORBAU
BICYCLE STEM

(30) Priorité: 19.09.2023 FR 2309874
(43) Date de publication de la demande: 26.03.2025
(73) Titulaire: Bastille Cycles, 75016 Paris (FR)
(72) Inventeur: HENRY, Gilles, 75016 Paris (FR); PROUST, Fabien, 75020 Paris (FR); CERVANTES, Francisco, 92370 Chaville (FR)
(74) Mandataire: Osha BWB

(56) Documents cités:
- CN-A- 1 631 709
- CN-A- 109 018 151
- CN-A- 110 435 803
- CN-U- 213 831 982
- TW-A- 201 118 000
- US-A1- 2020 277 020

## Description

### Domaine technique

L'invention concerne une potence de vélo. Cette potence peut être montée sur n'importe quel type de vélo.

### Arrière-plan

Une potence de vélo est une pièce qui joint le guidon d'un vélo au pivot de direction, également appelé pivot de fourche, dans la partie supérieure de la fourche du vélo. Certains vélos sont équipés d'une potence permettant de tourner le guidon de 90° par rapport au pivot de direction afin d'orienter le guidon parallèlement au plan médian de la roue avant du vélo. Le guidon ne fait alors plus saillie de part et d'autre de la roue avant, ce qui permet de faciliter le rangement du vélo. Des potences de ce type sont décrites, par exemple, dans les documents de brevet NL 2005592 A et DE 102011054696 A1. Toutefois, ces potences ne permettent pas de détacher rapidement le guidon du reste du vélo. Or, détacher le guidon pourrait s'avérer utile pour empêcher l'utilisation du vélo (et, ainsi, diminuer le risque de vol) ou pour faciliter son rangement. D'autres exemples de potence sont décrits dans les documents de brevet CN 213831982 U, US 2020/277020 A1, CN 109018151 A, CN 1631709 A, TW 201118000 A et CN 110435803 A.

Il existe donc un besoin pour une potence de vélo qui permette non seulement de modifier simplement (c'est-à-dire sans avoir à démonter de pièce et sans outil particulier) l'orientation du guidon par rapport au pivot de direction, mais qui permette également de détacher simplement et rapidement le guidon du reste du vélo, tout en garantissant une liaison mécanique robuste et fiable entre le guidon et le pivot de direction en position d'utilisation.

### Présentation générale

Une potence de vélo selon l'invention comprend une base adaptée pour être reliée fixement au pivot de direction du vélo et un corps de potence sur lequel le guidon du vélo peut être fixé. Le corps de potence est connectable à la base, de manière détachable, au moyen d'un montage à baïonnette.

Le montage à baïonnette permet la connexion du corps de potence à la base par poussée du corps de potence contre la base, suivant un axe d'engagement, puis par rotation (dans un premier sens de rotation) du corps de potence par rapport à la base, autour de l'axe d'engagement. Ainsi, le corps de potence et, avec lui, le guidon, peut être attaché facilement et rapidement au reste du vélo. Pour designer cette propriété, on parle ci-après d'« attache rapide ».

Inversement, le montage à baïonnette permet de déconnecter (i.e. de détacher) le corps de potence de la base en tournant (dans le sens inverse du premier sens de rotation) le corps de potence autour de l'axe d'engagement et en tirant axialement le corps de potence pour l'écarter de la base. Ainsi, le corps de potence et, avec lui, le guidon, peut être détaché facilement et rapidement du reste du vélo. Pour designer cette propriété, on parle ci-après de « libération rapide ».

De plus, le montage à baïonnette permet de modifier simplement l'orientation du guidon par rapport au pivot de direction, comme expliqué en détail ci-après. Enfin, le montage à baïonnette présente l'avantage d'être simple et robuste.

Pour renforcer la connexion du corps de potence à la base en position d'utilisation, sans altérer la propriété d'attache/libération rapide, la potence de vélo comprend, en outre, un crochet monté sur le corps de potence. Ce crochet est adapté pour s'accrocher dans un premier cran ménagé dans la base afin d'immobiliser le corps de potence dans une position d'utilisation. Dans la position d'utilisation, lorsque le crochet est accroché dans le premier cran, le corps de potence est solidaire de la base en rotation autour de l'axe d'engagement et solidaire de la base en translation suivant l'axe d'engagement. En d'autres termes, en accrochant le crochet dans le premier cran, on fixe la position relative entre le corps de potence et la base, ce qui permet de conduire le vélo.

Dans certains modes de réalisation, le corps de potence est creux et la base est adaptée pour être engagée à l'intérieur du corps de potence.

Le montage à baïonnette selon l'invention comprend au moins un doigt radial et au moins une rainure. Chaque rainure comprend un segment circonférentiel en arc de cercle autour de l'axe d'engagement et un segment axial parallèle à l'axe d'engagement. Par exemple, chaque rainure a la forme générale d'un L. Chaque doigt radial peut être engagé et glisser dans la rainure qui lui correspond.

Dans certains modes de réalisation, chaque doigt radial fait saillie à l'intérieur du corps de potence creux et chaque rainure est formée à la périphérie de la base.

L'invention a également pour objet un vélo comprenant un guidon, un pivot de direction et une potence selon l'invention, la potence reliant le guidon au pivot de direction. Le vélo peut être à deux roues ou plus (bicyclette, tricycle, etc.), être motorisé ou non (vélo à assistance électrique, pédélec, vélomoteur, etc.), être pliable ou non, l'invention n'étant limitée à aucun type de vélo.

D'autres caractéristiques et avantages de l'invention apparaîtront à la lecture de la description détaillée qui suit. Cette description détaillée fait référence aux dessins annexés.

### Brève description des dessins

Les dessins annexés sont schématiques et ne sont pas nécessairement à l'échelle, ils visent avant tout à illustrer les principes de l'invention. Sur ces dessins, d'une figure (fig.) à l'autre, des éléments (ou parties d'élément) identiques sont repérés par les mêmes signes de référence.
La figure 1 représente en perspective la partie supérieure de la fourche d'un vélo équipé d'un exemple de potence de vélo selon l'invention.
La figure 2 est une vue analogue à celle de la figure 1, dans laquelle le système de serrage de la potence est desserré.
La figure 3 est une vue analogue à celle des figures 1 et 2, dans laquelle le corps de la potence et le guidon du vélo sont tournés de 90° par rapport au pivot de direction du vélo.
La figure 4 est une vue analogue à celle des figures 1 à 3, dans laquelle le corps de potence et le guidon sont détachés.
La figure 5 est une vue éclatée d'un exemple de potence selon l'invention.

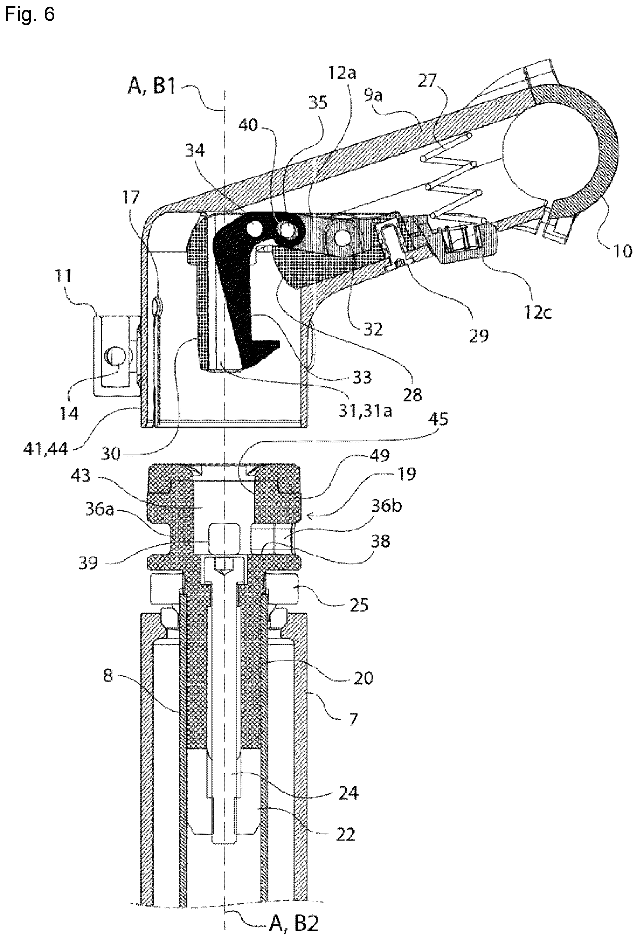

La figure 6 est une vue en coupe axiale de la potence de la figure 5 lorsque le corps de potence est détaché.
La figure 7 est une vue en coupe axiale de la potence lorsque le corps de potence est attaché au reste du vélo.
La figure 8 est une vue en coupe axiale analogue à celle de la figure 7, mais dans laquelle le crochet de la potence est décroché.
La figure 9 est une vue en coupe transversale de la potence selon le plan IX-IX de

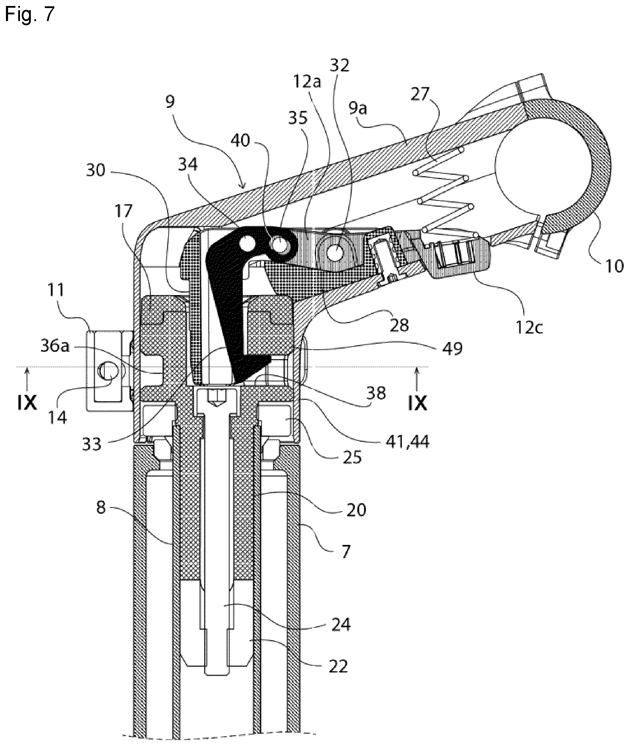

la figure 7, dans laquelle le système de serrage de la potence est serré.

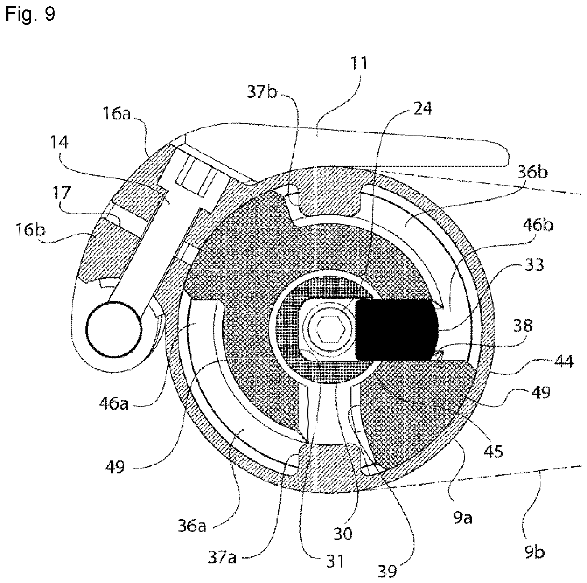

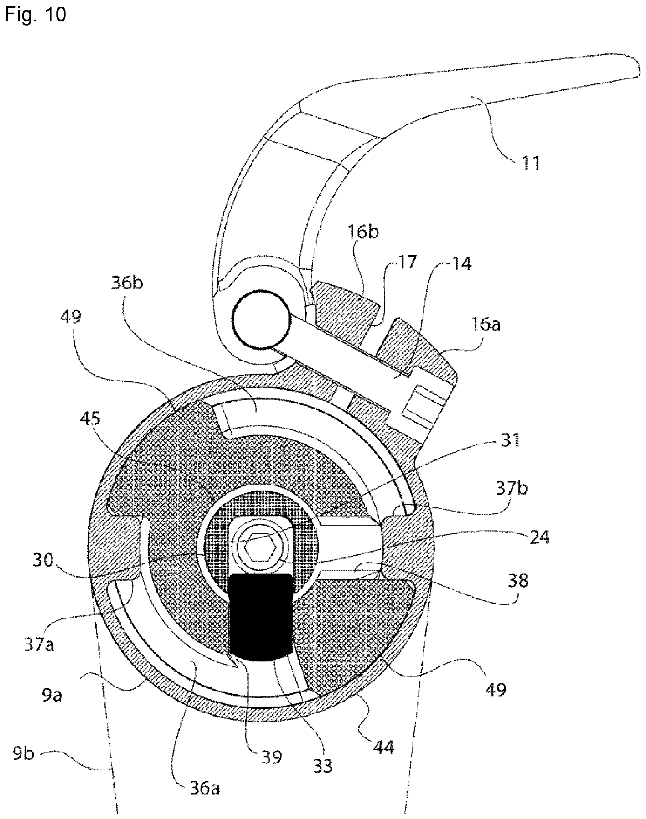

La figure 10 est une autre vue en coupe transversale de la potence, analogue à celle de la figure 9, dans laquelle le système de serrage de la potence est desserré.

### Description détaillée

Des modes de réalisation particuliers de la potence de vélo proposée sont décrits en détail ci-après. Certains modes sont décrits en faisant référence à l'exemple représenté sur les dessins annexés. Ces modes de réalisation illustrent les caractéristiques et les avantages de l'invention. Il est toutefois rappelé que l'invention ne se limite ni à ces modes de réalisation, ni à l'exemple représenté.

Dans certains modes de réalisation et dans l'exemple représenté sur les figures, la potence 2 comprend une base 19 adaptée pour être reliée fixement au pivot de direction 8 d'un vélo 1, et un corps de potence 9 sur lequel un guidon 3 de vélo peut être fixé. Le pivot de direction 8 est relié à la fourche 4 du vélo 1. Le pivot de direction 8 est monté rotatif dans le tube de direction 7 situé à l'avant du vélo 1. La base 19 est reliée fixement au pivot de direction 8. Dans l'exemple représenté, le tube de direction 7 se situe à la jonction du tube supérieur 5 et du tube diagonal 6 du cadre du vélo.

Dans certains modes de réalisation et dans l'exemple représenté, la base 19 est reliée fixement au pivot de direction 8 par un système connu de type plongeur comprenant un tube axial 20 s'étendant à l'intérieur du pivot de direction 8, une vis de serrage 24 s'étendant à l'intérieur du tube axial 20, et une cale 22 reliée à la vis de serrage 24. Le tube axial 20 est surmonté d'une partie plus large formant la tête 49 de la base 19. Une extrémité (i.e. la tête de vis) de la vis de serrage 24 est en appui contre la tête 49 de la base 19 et l'autre extrémité de la vis 24 est vissée dans la cale 22. L'extrémité inférieure du tube axial 20 présente une première surface oblique 21 et l'extrémité supérieure de la cale 22 présente une deuxième surface oblique 23. Lorsque la vis 24 est dévissée, la cale 22 est centrée axialement et elle ne s'oppose pas au coulissement du tube axial 20 à l'intérieur du pivot de direction 8 qui l'entoure. Lorsque la vis 24 est vissée, les surfaces obliques 21, 23 entrent en contact l'une avec l'autre, ce qui provoque un décentrage (i.e. un décalage radial) de la cale 22. La cale 22 s'oppose alors au coulissement du tube axial 20 à l'intérieur du pivot de direction. D'autres systèmes de fixation peuvent être envisagés pour relier fixement la base 19 au pivot de direction 8 sans sortir du cadre de l'invention.

Dans l'exemple représenté, le guidon 3 est fixé à l'extrémité avant du corps de potence 9 par une mâchoire 10 pouvant être serrée au moyen de vis 18.

Le corps de potence 9 est connectable à la base 19, de manière détachable, au moyen d'un montage à baïonnette. Le montage à baïonnette permet la connexion du corps de potence 9 à la base 19 par poussée du corps de potence 9 contre la base 19, suivant un axe d'engagement A, puis par rotation du corps de potence 9 par rapport à la base 19, autour de l'axe d'engagement A. Dans l'exemple des figures, l'axe d'engagement A correspond à l'axe de rotation du pivot de direction 8. Le montage à baïonnette permet d'attacher rapidement le corps de potence 9 à la base 19 et de détacher rapidement le corps de potence 9 de la base 19.

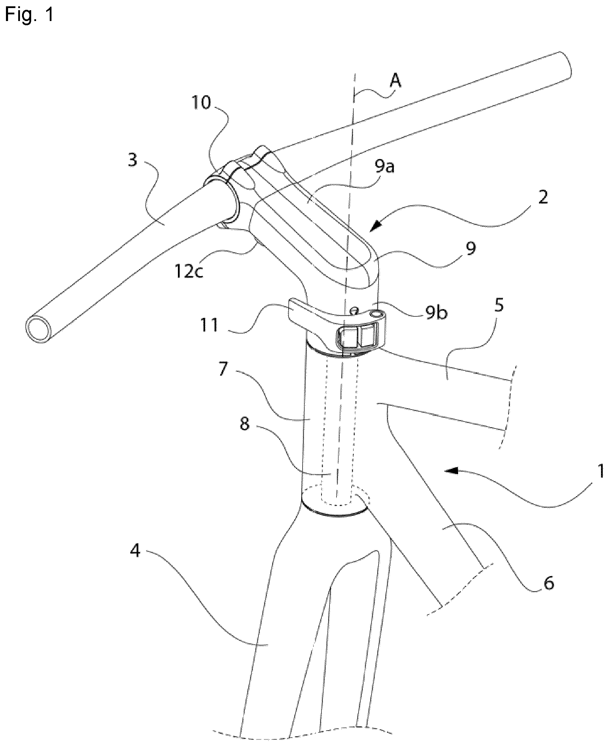

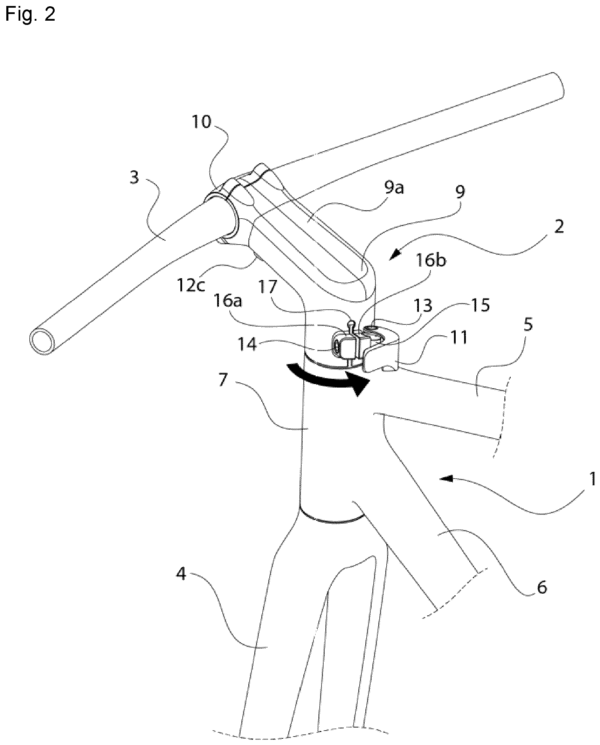

Dans certains modes de réalisation et dans l'exemple des figures, le corps de potence 9 présente une forme coudée avec une partie basse 9b s'étendant suivant l'axe d'engagement A et une partie haute 9a formant un angle avec la partie basse 9b. La partie haute 9a s'étend vers l'avant du vélo lorsque la potence 2 est en position d'utilisation et lorsque les roues avant et arrière du vélo 1 sont alignées. Cf. figures 1 et 2. L'extrémité inférieure de la partie basse 9b est connectable à la base 19. Le guidon 3 est fixé à l'extrémité avant de la partie haute 9a.

Dans la présente demande, l'horizontale et la verticale sont définis par rapport à la position d'utilisation du vélo 1 sur une surface horizontale. Le haut et le bas sont définis par rapport à la direction verticale. L'avant et l'arrière sont définis par rapport au sens de déplacement normal du vélo 1. La direction axiale correspond à la direction de l'axe d'engagement A. Une direction radiale est une direction perpendiculaire à l'axe d'engagement A et coupant cet axe. De même, un plan axial est un plan contenant l'axe d'engagement A et un plan radial, ou transversal, est un plan perpendiculaire à cet axe. Enfin, sauf précision contraire, les adjectifs intérieur et extérieur sont utilisés en référence à une direction radiale de sorte que la partie intérieure d'un élément est, suivant une direction radiale, plus proche de l'axe d'engagement A que la partie extérieure du même élément.

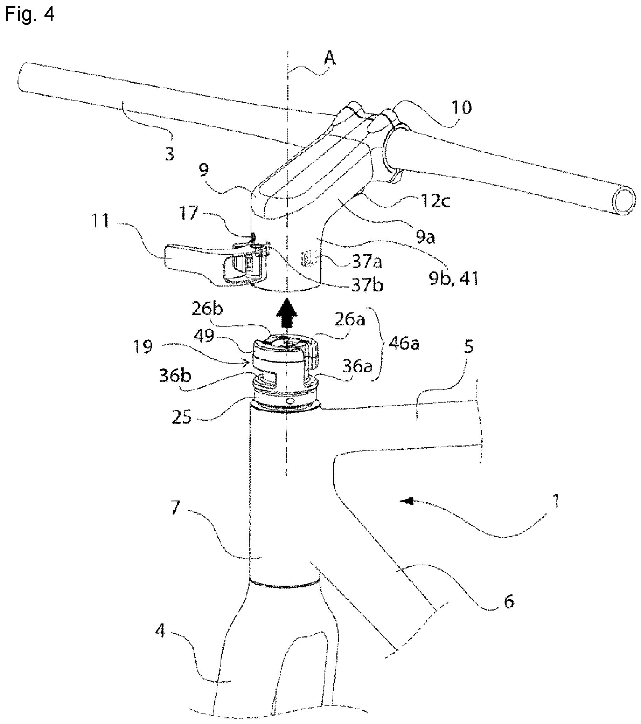

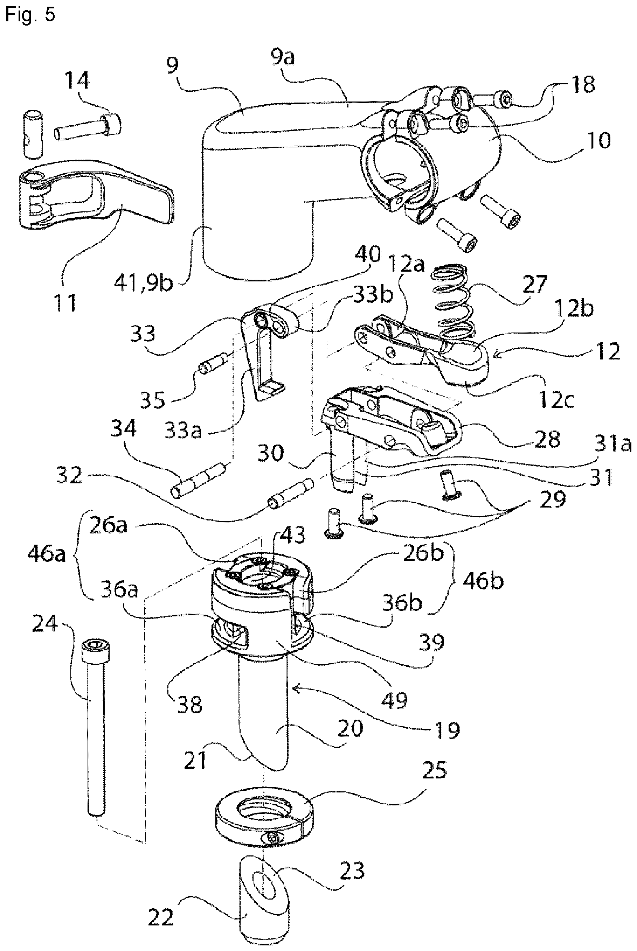

Dans certains modes de réalisation et dans l'exemple représenté, le montage à baïonnette comprend au moins un doigt radial 37a, 37b et au moins une rainure 46a, 46b en L. Chaque rainure 46a, 46b comprend un segment circonférentiel 36a, 36b en arc de cercle autour de l'axe d'engagement A et un segment axial 26a, 26b parallèle à l'axe d'engagement A. Chaque doigt radial 37a, 37b peut être engagé et glisser dans la rainure 46a, 46b qui lui correspond. Dans l'exemple des figures, le montage à baïonnette comprend deux doigt radiaux 37a, 37b, diamétralement opposés par rapport à l'axe d'engagement A, et deux rainures 46a, 46b correspondantes. Cf. figures 4, 5, 9 et 10.

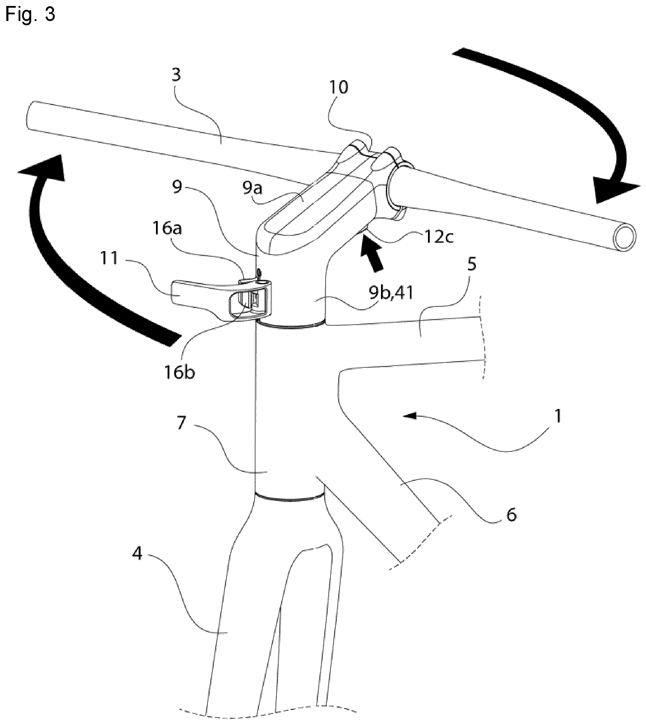

Dans certains modes de réalisation et dans l'exemple représenté sur les figures, lorsque chaque doigt radial 37a, 37b est engagé dans la rainure 46a, 46b qui lui correspond, le corps de potence 9 est mobile en rotation par rapport à la base 19, autour de l'axe d'engagement A, entre une position d'utilisation dans laquelle le doigt radial 37a, 37b se trouve à une extrémité du segment circonférentiel 36a, 36b et une position de déconnexion dans laquelle le doigt radial 37a, 37b se trouve à l'autre extrémité du segment circonférentiel 36a, 36b dans l'alignement du segment axial 26a, 26b. Dans la position d'utilisation, représentée sur les figures 1, 7 et 9, le mouvement axial du corps de potence 9 par rapport à la base 19 est empêché par l'engagement du doigt radial 37a, 37b dans le segment circonférentiel 36a, 36b. A partir de la position de déconnexion, représentée sur les figures 3 et 10, le corps de potence 9 peut être déconnecté de la base 19 en faisant glisser le doigt radial 37a, 37b dans le segment axial 26a, 26b de manière à faire sortir le doigt radial 37a, 37b de la rainure 46a, 46b. La position de déconnexion est donc une position intermédiaire, entre la position d'utilisation et la position déconnectée, à partir de laquelle le corps de potence 9 peut être déconnecté facilement de la base 19. En outre, dans cette position de déconnexion, l'encombrement du guidon 3 est moindre, le guidon (i.e. la direction générale du guidon) n'étant plus orienté perpendiculairement au plan médian de la roue avant du vélo mais plutôt parallèlement à celui-ci.

Dans certains modes de réalisation et dans l'exemple représenté sur les figures, la position d'utilisation et la position de déconnexion sont distantes angulairement d'un angle de rotation de 90° autour de l'axe d'engagement A. Le passage de la position d'utilisation à la position de déconnexion est illustré sur les figures 2 et 3. Sur la figure 2, le corps de potence 9 est dans sa position d'utilisation. Dans la position d'utilisation, le guidon 3 est orienté perpendiculairement au plan médian de la roue avant et ne peut pas être détaché de la base 19. Dans la position de déconnexion, le guidon 3 est orienté parallèlement au plan médian de la roue avant (l'encombrement du guidon 3 est alors réduit au maximum) et peut être détaché facilement de la base 19.

Comme illustré par les deux flèches courbes sur la figure 3, pour déconnecter le corps de potence 9 de la base 19, le guidon 3 est tourné de 90° par rapport au plan médian de la roue avant. Le corps de potence 9 est ainsi amené dans la position de déconnection. Il est alors possible de déconnecter, ou détacher, le corps de potence 9 de la base 19 en le tirant axialement vers le haut comme illustré par la flèche sur la figure 4. Le guidon 3 est alors détaché du reste du vélo 1. Le vélo 1 sans son guidon 3 est inutilisable, ce qui réduit le risque de vol. De plus, le vélo 1 sans son guidon 3 est encore moins encombrant, ce qui facilite son rangement. Ceci présente un intérêt particulier dans le cas d'un vélo pliable, le guidon 3 pouvant être détaché pour réduire au maximum l'encombrement du vélo plié. Un exemple de vélo pliable est décrit dans le brevet européen EP 3634842 B1.

Inversement, pour attacher le guidon 3 au reste du vélo 1 à partir de la position de la figure 4, le corps de potence 9 est poussé axialement vers le bas contre la base 19, dans le sens inverse de la flèche de la figure 4. Le corps de potence 9 est ainsi amené dans la position de déconnexion de la figure 3. A partir de cette position de déconnexion, le corps de potence 9 est tourné dans le sens inverse des flèches de la figure 3 jusqu'à la position d'utilisation de la figure 2.

La potence 2 comprend un crochet 33 monté sur le corps de potence 9 et adapté pour s'accrocher dans un premier cran 38 ménagé dans la base 19 afin d'immobiliser le corps de potence 9 dans la position d'utilisation. En d'autres termes, lorsque le crochet 33 est accroché dans le premier cran 38, comme représenté sur les figures 7 et 9, il n'est plus possible de bouger, en particulier de faire tourner, le corps de potence 9 par rapport à la base 19 : le corps de potence 9 est solidaire de la base 19 en rotation et en translation axiale. Dans cette position d'utilisation, le pivot de direction 8 et, avec lui, la fourche 4 et la roue avant du vélo peuvent être orientés dans la direction souhaitée en tournant le guidon 3. En d'autres termes, dans la position d'utilisation, il est possible de conduire le vélo.

Dans certains modes de réalisation et dans l'exemple représenté sur les figures, le crochet 33 est adapté pour s'accrocher dans un deuxième cran 39 ménagé dans la base 19 afin d'immobiliser le corps de potence 9 en position de déconnexion. En d'autres termes, lorsque le crochet 33 est accroché dans le deuxième cran 39, le corps de potence 9 est en position de déconnexion et il n'est plus possible de bouger, en particulier de faire tourner, le corps de potence 9 par rapport à la base 19 : le corps de potence 9 est solidaire de la base 19 en rotation et en translation axiale.

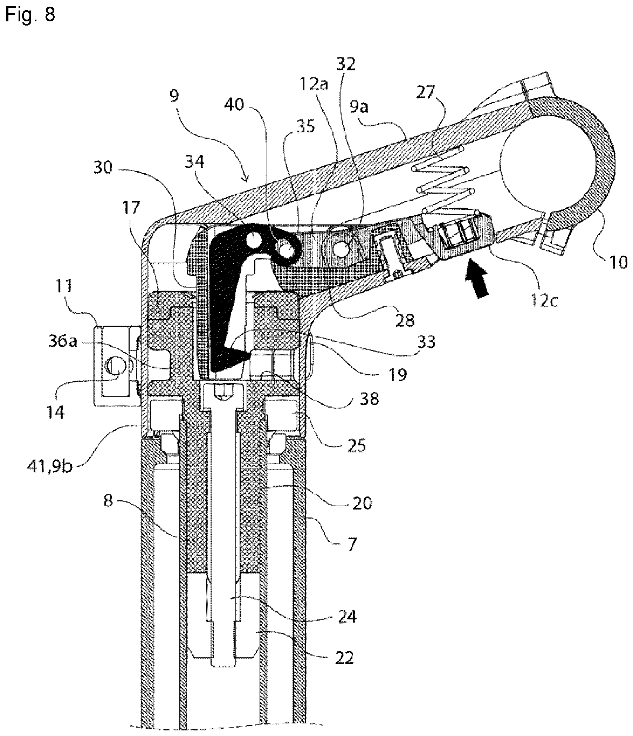

Les figures 7 et 8 représentent respectivement le crochet 33 en position accrochée et en position décrochée. Les figures 9 et 10 représentent, respectivement, le crochet 33 accroché dans le premier cran 38 et dans le deuxième cran 39.

Dans certains modes de réalisation et dans l'exemple représenté sur les figures, le crochet 33 est monté de manière pivotante sur le corps de potence 9 et est actionnable au moyen d'un levier 12. Dans l'exemple des figures, le crochet 33 est monté pivotant autour d'un deuxième axe 34 supporté par le corps de potence 9. Le crochet 33 est entraîné en rotation autour du deuxième axe 34 par un levier 12 lui-même monté pivotant autour d'un premier axe 32 supporté par le corps de potence 9. Le crochet 33 comprend un bras axial 33a et un bras radial 33b s'étendant de part et d'autre du deuxième axe 34. Le levier 12 comprend deux bras 12a, 12b s'étendant de part et d'autre du premier axe 32. Le premier bras 12a du levier s'étend d'un côté du premier axe 32 et est relié au bras radial 33b du crochet 33. Le deuxième bras 12b du levier 12 s'étend de l'autre côté du premier axe 32 et forme un bouton poussoir 12c sur lequel l'utilisateur peut appuyer pour entrainer le levier 12 en rotation autour du premier axe 32, comme illustré par les flèches sur les figures 3 et 8. Le bouton 12c se situe sous la partie haute 9a du corps de potence 9. Dans l'exemple, un ressort 27 est prévu à l'intérieur du corps de potence 9 pour maintenir le levier 12 dans une position stable, représentée sur la figure 7, dans laquelle le bouton 12c est dans sa position non-enfoncée, et le crochet 33 est dans sa position décrochée. Dans l'exemple, en position non-enfoncée, le bouton 12c fait saillie sous la partie haute 9a du corps de potence 9 pour être plus accessible et facilement manipulable.

Dans l'exemple des figures, les premier et deuxième axes 32, 34 sont matérialisés par des arbres traversant le crochet 33 et le levier 12 et supportés chacun par deux paliers formés dans les parois latérales d'un support 28 faisant partie du corps de potence 9. Le support 28 est logé à l'intérieur de l'enveloppe constitutive du corps de potence 9 et fixé à cette enveloppe par des vis 29. Le mécanisme d'actionnement du crochet 33 est ainsi protégé des chocs extérieurs. D'autres configurations peuvent toutefois être envisagées. En particulier, le support 28 peut être formé d'une seule pièce avec le reste du corps de potence 9.

Dans certains modes de réalisation et dans l'exemple des figures, le bras radial 12a du levier 12 porte un pion 35. En outre, une ouverture oblongue 40 est ménagée dans le bras radial 33b du crochet 33. L'ouverture oblongue 40 et le levier 12 sont configurés pour que le pion 35 se déplace dans et le long de l'ouverture oblongue 40 lors de la rotation du levier 12 autour du premier axe 32. Le déplacement du pion 35 dans l'ouverture oblongue 40 fait alors pivoter le crochet 33 autour du deuxième axe 34, comme illustré sur les figures 7 et 8.

Dans certains modes de réalisation et dans l'exemple des figures, le corps de potence 9 comprend un pied de fixation 41 de forme générale cylindrique autour d'un premier axe de révolution B1 tandis que la base 19 comprend une tête de fixation 49 de forme générale cylindrique autour d'un deuxième axe de révolution B2. Le pied de fixation 41 et la tête de fixation 49 sont adaptés pour être engagés l'un dans l'autre coaxialement. Dans l'exemple des figures, le pied de fixation 41 forme la partie basse 9b du corps de potence 9. Le premier axe de révolution B1 et le deuxième axe de révolution B2 sont alignés l'un avec l'autre et avec l'axe d'engagement A lorsque le pied de fixation 41 et la tête de fixation 49 sont engagés l'un dans l'autre.

Dans certains modes de réalisation et dans l'exemple représenté, le pied de fixation 41 comprend un manchon 44 ayant comme axe central le premier axe de révolution B1, et la tête de fixation 49 est adaptée pour être engagée coaxialement dans le manchon 44.

Dans certains modes de réalisation et dans l'exemple représenté, les doigts radiaux 37a, 37b font saillie à l'intérieur du manchon 44 et les rainures 46a, 46b sont formées à la périphérie de la tête de fixation 49. Pour chaque rainure 46a, 46b, le segment circonférentiel 36a, 36b s'étend circonférentiellement autour de la tête de fixation 49 et le segment axial 26a, 26b s'étend axialement le long de la tête de fixation 49, depuis le segment circonférentiel 36a, 36b jusqu'à l'extrémité supérieure de la tête de fixation 49.

Dans certains modes de réalisation et dans l'exemple représenté, le corps de potence 9 comprend une tige centrale 30 s'étendant au centre du manchon 44 suivant le premier axe de révolution B1, le crochet de verrouillage 33 étant logé à l'intérieur de la tige centrale 30. En l'occurrence, dans l'exemple représenté, le bras axial 33a du crochet 33 est logé dans la tige centrale 30 tandis que le bras radial 33b s'étend à l'extérieur de la tige centrale 30. La tige centrale 30 est creuse et définit un logement 31 pour le bras axial 33a du crochet 33. Lorsque le crochet 33 pivote, il sort ou rentre à l'intérieur du logement 31 par une fente axiale 31a prévue le long de la tige centrale 30 et adjacente au logement 31. Dans la position sortie ou accrochée du crochet 33, l'extrémité inférieure du bras axial 33a en forme de crochet fait saillie en dehors de la tige centrale 30 tandis que, dans la position rentrée ou décrochée du crochet 33, l'extrémité inférieure du bras axial 33a est intégralement logée dans le logement 31. Dans cet exemple, la tige centrale 30 est formée d'une seule pièce avec le support 28 mais d'autres configurations peuvent être envisagées.

Dans certains modes de réalisation et dans l'exemple représenté, un trou central 43 est ménagé dans la tête de fixation 49 pour recevoir la tige centrale 30 lorsque la tête de fixation 49 est engagée dans le manchon 44. Le trou central 43 et la tige centrale 30 s'étendent tous les deux suivant l'axe d'engagement A. Le premier cran 38 est ménagé dans la paroi latérale 45 délimitant le trou central 43. De même, lorsqu'un deuxième cran 39 est prévu, le deuxième cran 39 est ménagé dans la paroi latérale 45 délimitant le trou central 43.

Dans certains modes de réalisation et dans l'exemple représenté, la potence 2 comprend, en outre, un système de serrage permettant de serrer le manchon 44 contre la tête de fixation 49 lorsque la tête de fixation 49 est engagée dans le manchon 44. Un tel système permet de verrouiller la position relative du manchon 44 par rapport à la tête de fixation 49 tout en réduisant le jeu entre ces pièces. Ceci permet d'obtenir une liaison encore plus stable et encore plus robuste entre le corps de potence 9 et la base 19. Dans l'exemple, ce système permet d'immobiliser le corps de potence 9 dans la position d'utilisation et vient renforcer le verrouillage produit par l'engagement du crochet 33 dans le premier cran 38.

Dans certains modes de réalisation et dans l'exemple représenté, le manchon 44 présente une fente 17 s'étendant le long du manchon 44 et l'actionnement du système de serrage permet de réduire l'écartement (i.e. la largeur) de la fente 17. Dans l'exemple des figures, la fente 17 s'étend depuis l'extrémité libre du manchon 44. Lorsque l'écartement de la fente diminue, le diamètre intérieur du manchon 44 diminue et le manchon 44 serre la tête de fixation 49, ce qui réduit le jeu entre ces pièces.

Dans certains modes de réalisation et dans l'exemple représenté, le système de serrage comprend un levier à came 11 associé à une tige de serrage 14. La fente 17 du manchon 44 est bordée par deux plots 16a, 16b traversés par la tige de serrage 14. L'actionnement du levier à came 11 permet de rapprocher les deux plots 16a, 16b l'un de l'autre et, ainsi, de réduire l'écartement de la fente 17.

Les modes de réalisation décrits dans le présent exposé sont donnés à titre illustratif et non limitatif. Les revendications annexées définissent l'objet de la protection demandée.

## Revendications

1. Potence de vélo comprenant :
un corps de potence (9) sur lequel un guidon (3) de vélo peut être fixé, et
une base (19) adaptée pour être reliée fixement au pivot de direction (8) d'un vélo (1),
dans laquelle le corps de potence (9) est connectable à la base (19);
**caractérisée en ce que** le corps de potence (9) est connectable à la base (19), de manière détachable, au moyen d'un montage à baïonnette comprenant au moins un doigt radial (37a, 37b) et au moins une rainure (46a, 46b), et
**en ce que** le montage à baïonnette permet la connexion du corps de potence (9) à la base (19) par poussée du corps de potence (9) contre la base (19), suivant un axe d'engagement (A), puis par rotation du corps de potence (9) par rapport à la base (19), autour de l'axe d'engagement (A), chaque rainure (46a, 46b) comprenant un segment circonférentiel (36a, 36b) en arc de cercle autour de l'axe d'engagement (A) et un segment axial (26a, 26b) parallèle à l'axe d'engagement (A), et chaque doigt radial (37a, 37b) pouvant être engagé et glisser dans la rainure (46a, 46b) qui lui correspond,
la potence de vélo comprenant, en outre, un crochet (33) monté sur le corps de potence (9) et adapté pour s'accrocher dans un premier cran (38) ménagé dans la base (19) afin d'immobiliser le corps de potence (9) dans une position d'utilisation dans laquelle le corps de potence (9) est solidaire de la base (19) en rotation autour de l'axe d'engagement (A) et solidaire de la base (19) en translation suivant l'axe d'engagement (A).

2. Potence de vélo selon la revendication 1, dans laquelle chaque rainure (46a, 46b) a la forme générale d'un L.

3. Potence de vélo selon la revendication 1 ou 2, dans laquelle :
le corps de potence (9) est creux et la base (19) est adaptée pour être engagée à l'intérieur du corps de potence (9) ; et
chaque doigt radial (37a, 37b) fait saillie à l'intérieur du corps de potence (9) et chaque rainure (46a, 46b) est formée à la périphérie de la base (19).

4. Potence de vélo selon la revendication 2 ou 3, dans laquelle :
lorsque chaque doigt radial (37a, 37b) est engagé dans la rainure (46a, 46b) qui lui correspond et lorsque le crochet (33) est en position décrochée, le corps de potence (9) est mobile en rotation par rapport à la base (19), autour de l'axe d'engagement (A), entre la position d'utilisation dans laquelle le doigt radial (37a, 37b) se trouve à une extrémité du segment circonférentiel (36a, 36b) et une position de déconnexion dans laquelle le doigt radial (37a, 37b) se trouve à l'autre extrémité du segment circonférentiel (36a, 36b) dans l'alignement du segment axial (26a, 26b);
dans la position d'utilisation, le mouvement axial du corps de potence (9) par rapport à la base (19) est empêché par l'engagement du doigt radial (37a, 37b) dans le segment circonférentiel (36a, 36b);
à partir de la position de déconnexion, le corps de potence (9) peut être déconnecté de la base (19) en faisant glisser le doigt radial (37a, 37b) dans le segment axial (26a, 26b) de manière à faire sortir le doigt radial (37a, 37b) de la rainure (46a, 46b).

5. Potence de vélo selon la revendication 4, dans laquelle le crochet (33) est adapté pour s'accrocher dans un deuxième cran (39) ménagé dans la base (19) afin d'immobiliser le corps de potence (9) dans la position de déconnexion.

6. Potence de vélo selon la revendication 4 ou 5, dans laquelle la position d'utilisation et la position de déconnexion sont distantes angulairement d'un angle de rotation de 90°.

7. Potence de vélo selon l'une quelconque des revendications 1 à 6, dans laquelle :
le corps de potence (9) comprend un pied de fixation (41) de forme générale cylindrique autour d'un premier axe de révolution (B1);
la base (19) comprend une tête de fixation (49) de forme générale cylindrique autour d'un deuxième axe de révolution (B2);
le pied de fixation (41) et la tête de fixation (49) sont adaptés pour être engagés l'un dans l'autre coaxialement.

8. Potence de vélo selon la revendication 7, dans laquelle :
le pied de fixation (41) comprend un manchon (44) ayant comme axe central le premier axe de révolution (B1); et
la tête de fixation (49) est adaptée pour être engagée coaxialement dans le manchon (44).

9. Potence de vélo selon la revendication 8, dans laquelle :
le corps de potence (9) comprend une tige centrale (30) s'étendant au centre du manchon (44) suivant le premier axe de révolution (B1);
le crochet (33) est logé en partie à l'intérieur de la tige centrale (30) ;
un trou central (43) est ménagé dans la tête de fixation (49) pour recevoir la tige centrale (30) lorsque la tête de fixation (49) est engagée dans le manchon (44); et
le premier et/ou le deuxième cran (38, 39) est ménagé dans la paroi latérale (45) délimitant le trou central (43).

10. Potence selon la revendication 8 ou 9, comprenant, en outre, un système de serrage permettant de serrer le manchon (44) contre la tête de fixation (49) lorsque la tête de fixation (49) est engagée dans le manchon (44).

11. Vélo comprenant un guidon (3), un pivot de direction (8) et une potence selon l'une quelconque des revendications 1 à 10, la potence reliant le guidon (3) au pivot de direction (8).

12. Vélo selon la revendication 11, comprenant une roue avant et une potence selon la revendication 6, dans lequel, dans la position d'utilisation, le guidon (3) est orienté perpendiculairement au plan médian de la roue avant et, dans la position de déconnexion, le guidon (3) est orienté parallèlement au plan médian de la roue avant.

## Patentansprüche

1. Fahrradlenkervorbau, aufweisend:
einen Vorbaukörper (9), an dem ein Fahrradlenker (3) befestigbar ist, und
eine Basis (19), die dazu eingerichtet ist, fest mit dem Gabelschaft (8) eines Fahrrads (1) verbunden zu werden,
wobei der Vorbaukörper (9) mit der Basis (19) verbindbar ist;
**dadurch gekennzeichnet, dass** der Vorbaukörper (9) mit der Basis (19) lösbar verbindbar ist mittels einer Bajonettmontage, die mindestens einen radialen Finger (37a, 37b) und mindestens eine Nut (46a, 46b) umfasst, und
dass die Bajonettmontage die Verbindung des Vorbaukörpers (9) mit der Basis (19) durch Aufschieben des Vorbaukörpers (9) gegen die Basis (19) entlang einer Eingriffsachse (A) und anschließend durch eine Drehung des Vorbaukörpers (9) relativ zur Basis (19) um die Eingriffsachse (A) ermöglicht, wobei jede Nut (46a, 46b) ein in einem Kreisbogen um die Eingriffsachse (A) verlaufendes Umfangssegment (36a, 36b) und ein zur Eingriffsachse (A) paralleles Axialsegment (26a, 26b) umfasst und jeder radiale Finger (37a, 37b) in die ihm entsprechende Nut (46a, 46b) einführbar ist und darin gleiten kann,
wobei der Fahrradlenkervorbau ferner einen an dem Vorbaukörper (9) montierten Haken (33) aufweist, der dazu eingerichtet ist, in einen ersten Rastabschnitt (38) einzurasten, der in der Basis (19) ausgebildet ist, um den Vorbaukörper (9) in einer Gebrauchslage zu fixieren, in welcher der Vorbaukörper (9) relativ zur Basis (19) um die Eingriffsachse (A) verdrehfest und relativ zur Basis (19) entlang der Eingriffsachse (A) translationsfest ist.

2. Fahrradlenkervorbau gemäß Anspruch 1, wobei jede Nut (46a, 46b) eine im Wesentlichen L-förmige Gestalt aufweist.

3. Fahrradlenkervorbau gemäß Anspruch 1 oder 2, wobei:
der Vorbaukörper (9) hohl ist und die Basis (19) dazu eingerichtet ist, in den Vorbaukörper (9) eingesteckt zu werden; und
jeder radiale Finger (37a, 37b) in das Innere des Vorbaukörpers (9) vorspringt und jede Nut (46a, 46b) am Umfang der Basis (19) ausgebildet ist.

4. Fahrradlenkervorbau gemäß Anspruch 2 oder 3, wobei:
wenn jeder radiale Finger (37a, 37b) in die ihm entsprechende Nut (46a, 46b) eingreift und wenn der Haken (33) in einer ausgehakten Stellung ist, der Vorbaukörper (9) relativ zur Basis (19) um die Eingriffsachse (A) zwischen der Gebrauchslage, in welcher sich der radiale Finger (37a, 37b) an einem Ende des Umfangssegments (36a, 36b) befindet, und einer Trennstellung beweglich ist, in welcher sich der radiale Finger (37a, 37b) am anderen Ende des Umfangssegments (36a, 36b) in Ausrichtung mit dem Axialsegment (26a, 26b) befindet;
in der Gebrauchslage die axiale Bewegung des Vorbaukörpers (9) relativ zur Basis (19) durch das Eingreifen des radialen Fingers (37a, 37b) in das Umfangssegment (36a, 36b) verhindert ist;
ausgehend von der Trennstellung der Vorbaukörper (9) von der Basis (19) getrennt werden kann, indem der radiale Finger (37a, 37b) im Axialsegment (26a, 26b) gleitet, sodass der radiale Finger (37a, 37b) aus der Nut (46a, 46b) herausgeführt wird.

5. Fahrradlenkervorbau gemäß Anspruch 4, wobei der Haken (33) dazu eingerichtet ist, in einen zweiten Rastabschnitt (39) einzurasten, der in der Basis (19) ausgebildet ist, um den Vorbaukörper (9) in der Trennstellung zu fixieren.

6. Fahrradlenkervorbau gemäß Anspruch 4 oder 5, wobei die Gebrauchslage und die Trennstellung um einen Drehwinkel von 90° voneinander beabstandet sind.

7. Fahrradlenkervorbau gemäß einem der Ansprüche 1 bis 6, wobei:
der Vorbaukörper (9) einen Befestigungssockel (41) mit im Wesentlichen zylindrischer Form um eine erste Rotationsachse (B1) aufweist;
die Basis (19) einen Befestigungskopf (49) mit im Wesentlichen zylindrischer Form um eine zweite Rotationsachse (B2) aufweist;
der Befestigungssockel (41) und der Befestigungskopf (49) dazu eingerichtet sind, koaxial ineinander eingesteckt zu werden.

8. Fahrradlenkervorbau gemäß Anspruch 7, wobei:
der Befestigungssockel (41) eine Hülse (44) aufweist, deren Mittelachse die erste Rotationsachse (B1) bildet; und
der Befestigungskopf (49) dazu eingerichtet ist, koaxial in die Hülse (44) eingesteckt zu werden.

9. Fahrradlenkervorbau gemäß Anspruch 8, wobei:
der Vorbaukörper (9) eine zentrale Stange (30) aufweist, die sich im Zentrum der Hülse (44) entlang der ersten Rotationsachse (B1) erstreckt;
der Haken (33) teilweise im Inneren der zentralen Stange (30) aufgenommen ist;
in dem Befestigungskopf (49) eine zentrale Öffnung (43) ausgebildet ist, um die zentrale Stange (30) aufzunehmen, wenn der Befestigungskopf (49) in die Hülse (44) eingesteckt ist; und
der erste und/oder der zweite Rastabschnitt (38, 39) in der Seitenwand (45) ausgebildet ist, welche die zentrale Öffnung (43) begrenzt.

10. Fahrradlenkervorbau gemäß Anspruch 8 oder 9, ferner aufweisend ein Spannsystem, das dazu eingerichtet ist, die Hülse (44) gegen den Befestigungskopf (49) zu verspannen, wenn der Befestigungskopf (49) in die Hülse (44) eingesteckt ist.

11. Fahrrad, aufweisend einen Lenker (3), einen Steuerrohrschaft (8) und einen Fahrradlenkervorbau gemäß einem der Ansprüche 1 bis 10, wobei der Fahrradlenkervorbau den Lenker (3) mit dem Steuerrohrschaft (8) verbindet.

12. Fahrrad gemäß Anspruch 11, umfassend ein Vorderrad und einen Fahrradlenkervorbau gemäß Anspruch 6, wobei in der Gebrauchslage der Lenker (3) senkrecht zur Mittelebene des Vorderrads ausgerichtet ist und in der Trennstellung der Lenker (3) parallel zur Mittelebene des Vorderrads ausgerichtet ist.

## Claims

1. A bicycle handlebar stem comprising:
a handlebar stem body (9) to which a bicycle handlebar (3) can be fixed, and
a base (19) designed to be fixedly connected to the steering pivot (8) of a bicycle (1),
wherein the handlebar stem body (9) is connectable to the base (19);
**characterized in that** the handlebar stem body (9) is detachably connectable to the base (19) by means of a bayonet fitting comprising at least one radial finger (37a, 37b) and at least one groove (46a, 46b), and
wherein the bayonet fitting makes it possible to connect the handlebar stem body (9) to the base (19) by pushing the handlebar stem body (9) against the base (19), along an engagement axis (A), and then by rotating the handlebar stem body (9) relative to the base (19), about the engagement axis (A), each groove (46a, 46b) comprising a circumferential segment (36a, 36b) in the form of a circular arc about the engagement axis (A) and an axial segment (26a, 26b) parallel to the engagement axis (A), and each radial finger (37a, 37b) can be engaged and slide in the groove (46a, 46b) which corresponds to it,
the bicycle handlebar stem further comprising a hook (33) mounted on the handlebar stem body (9) and designed to catch in a first notch (38) formed in the base (19) in order to immobilize the handlebar stem body (9) in a use position in which the handlebar stem body (9) is rotationally fixed to the base (19) about the engagement axis (A) and translationally fixed to the base along the engagement axis (A).

2. The bicycle handlebar stem of claim 1, wherein each groove (46a, 46b) has an overall L shape.

3. The bicycle handlebar stem of claim 1 or 2, wherein:
the handlebar stem body (9) is hollow and the base (19) is designed to be engaged inside the handlebar stem body (9); and
each radial finger (37a, 37b) projects into the handlebar stem body (9) and each groove (46a, 46b) is formed in the periphery of the base (19).

4. The bicycle handlebar stem of claim 2 or 3, wherein:
when each radial finger (37a, 37b) is engaged in the groove (46a, 46b) which corresponds to it and when the hook (33) is in an unhooked position, the handlebar stem body (9) can be rotated relative to the base (19), about the engagement axis (A), between the use position in which the radial finger (37a, 37b) is at one end of the circumferential segment (36a, 36b) and a disconnection position in which the radial finger (37a, 37b) is at the other end of the circumferential segment (36a, 36b) in line with the axial segment (26a, 26b);
in the use position, the axial movement of the handlebar stem body (9) relative to the base (19) is prevented by the engagement of the radial finger (37a, 37b) in the circumferential segment (36a, 36b);
from the disconnection position, the handlebar stem body (9) can be disconnected from the base (19) by sliding the radial finger in the axial segment (26a, 26b) so as to bring the radial finger (37a, 37b) out of the groove (46a, 46b).

5. The bicycle handlebar stem of claim 4, wherein the hook (33) is designed to catch in a second notch (39) formed in the base (19) in order to immobilize the handlebar stem body (9) in the disconnection position.

6. The bicycle handlebar stem of claim 4 or 5, wherein the use position and the disconnection position are angularly spaced by a rotational angle of 90°.

7. The bicycle handlebar stem of claim 1 to 6, wherein:
the handlebar stem body (9) comprises a fixing foot (41) of cylindrical overall shape about a first axis of revolution (B1);
the base (19) comprises a fixing head (49) of cylindrical overall shape about a second axis of revolution (B2);
the fixing foot (41) and the fixing head (49) are designed to be coaxially engaged in one another.

8. The bicycle handlebar stem of claim 7, wherein:
the fixing foot (41) comprises a sleeve (44) having the first axis of revolution as central axis (B1); and
the fixing head (49) is designed to be coaxially engaged in the sleeve (44).

9. The bicycle handlebar stem of claim 8, wherein:
the handlebar stem body (9) comprises a central rod (30) extending in the centre of the sleeve (44) along the first axis of revolution (B1);
the hook (33) is partially accommodated inside the central rod (30);
a central hole (43) is formed in the fixing head (49) for receiving the central rod (30) when the fixing head (49) is engaged in the sleeve (44); and
the first and/or the second notch (38, 39) is formed in the lateral wall (45) delimiting the central hole (43).

10. The handlebar stem of claim 8 or 9, further comprising a clamping system for clamping the sleeve (44) against the fixing head (49) when the fixing head (49) is engaged in the sleeve (44).

11. A bicycle comprising a handlebar (3), a steering pivot (8), and a handlebar stem according to any one of claims 1 to 10, the handlebar stem connecting the handlebar (3) to the steering pivot (8).

12. The bicycle according to claim 11, comprising a front wheel and a handlebar stem according to claim 6, wherein, in the use position, the handlebar (3) is oriented perpendicular to the median plane of the front wheel and, in the disconnection position, the handlebar (3) is oriented parallel to the median plane of the front wheel.
